# EUROPÄISCHE PATENTSCHRIFT

(11) **EP 0 879 985 B1**
(45) Veröffentlichungstag und Bekanntmachung des Hinweises auf die Patenterteilung: **09.08.2000**
(21) Anmeldenummer: 98890144.3
(22) Anmeldetag: 18.05.1998
(51) Int. Cl.: F16L 33/207

(54) **Verpressbare Rohrverbindung**
Compression fitting for pipes
Raccords à compression pour tuyaux

(30) Priorität: 20.05.1997 DE 19721078
(43) Veröffentlichungstag der Anmeldung: 25.11.1998
(60) Teilanmeldung: 99112592.3
(73) Patentinhaber: Herz Armaturen Ges.m.b.H., 1232 Wien (AT)
(72) Erfinder: Jäggi, Georg, 2572 Kaumberg (AT)
(74) Vertreter: Patentanwälte Leinweber & Zimmermann

(56) Entgegenhaltungen:
- EP-A- 0 555 650
- EP-A- 0 589 413
- WO-A-92/09840
- DE-U- 29 711 313

## Beschreibung

Die Erfindung betrifft eine verpreßbare Rohrverbindung nach dem Oberbegriff des Patentanspruchs 1.

Rohrverbindungen im Installationsbereich, z.B. bei Zentralheizungen werden verschraubt und mit Hanf oder Siliconband gedichtet oder verschweißt. Auch die Verbindungen zu Amaturen und Fittings wurden auf diese Weise hergestellt. Eine moderne Alternative stellen Preßverbindungen dar. Das Ende eines Installationsrohres (meist aus Kunststoff-Metall Verbundmaterial) wird über einen Anschlußstutzen eines Fittings geschoben. Eine konzentrische, dem Rohr überschobene Preßhülse wird über jenem Rohrbereich positioniert, der im zusammengesteckten Zustand über dem Anschlußstutzen liegt und dann wird die Preßhülse mittels einer Preßzange gequetscht. Preßbacken der Preßzange bewirken eine lokale Querschnittsverkleinerung beispielsweise in zwei im axialen Abstand liegenden Zonen. Durch Anschläge oder Positionsmarken erfolgt das Verpressen derart, daß die als Preßmarken oder Preßflächen auftretenden sichtbaren Verformungen über einen strukturierten Bereich des Anschlußstutzens des Fittings liegen. Dadurch erfolgt eine mechanische Verbindung, die Zugkräfte aufnimmt. Meist ist im unverpreßten Bereich der Rohrverbindung zwischen dem Rohr und dem Rohrstutzen in einer Ringnut desselben ein O-Ring vorgesehen; dieser legt sich elastisch an die Rohrinnenwand an, wobei sich die Dichtwirkung mit zunehmendem Wasserdruck erhöht.

Wenngleich verpreßbare Rohrverbindungen der vorgenannten Art in den meisten Betriebsfällen zu zufriedenstellenden Ergebnissen führen, haben Untersuchungen gezeigt, daß die unterschiedlichen Materialien des Fittings einerseits und des Kunststoff-Metall Verbundstoffes des Installationsrohres anderseits unterschiedliche Dehnungen an den Dichtflächen hervorrufen. Ferner sind O-Ringe bei geringer Druckbelastung durch das abzudichtende Medium, also z.B. Wasser, nicht dicht. Wenn also besondere Umstände hinsichtlich Temperatur und Druck zusammentreffen, dann kann es mit herkömmlichen verpreßten Rohrverbindungen zu Schwierigkeiten kommen.

Ferner sind in der EP-A-0 589 413, EP-A-0 555 650 und WO 92 09840 auch noch verpreßbare Rohrverbindungen nach dem Oberbegriff des beigefügten Patentanspruchs 1 beschrieben, bei denen beide O-Ringe zwischen dem Anschlußstutzen und dem Installationsrohr eine durch den Anpreßdruck unter entsprechenden Preßflächen bewirkte Verformung aufweisen.

Die Erfindung zielt darauf ab, eine Rohrverbindung der eingangs beschriebenen Art so zu verbessern, daß auch bei wechselnden Temperatur- und Druckwerten eine einwandfreie Dichtwirkung gegeben ist. Dies wird dadurch erreicht, daß mindestens ein O-Ring unter einer Preßfläche bzw. unmittelbar neben einer Preßfläche oder unmittelbar zwischen zwei Preßflächen in der Preßhülse oder im Installationsrohr angeordnet ist und der Anpreßdruck unter der Preßfläche der zulässigen Verformung des O-Ringes entspricht. Die Verpressung erfolgt somit zusätzlich auch im Bereich mindestens eines O-Ringes bzw. es wird ein O-Ring in einen Bereich des Anschlußstutzens des Fittings gesetzt, in welchem die Preßzange die Preßhülse und bzw. oder das Installationsrohr im Querschnitt verjüngt. Letztere konstruktive Anpassung an die Preßzonen der Preßzange sind im Hinblick auf die große Zahl der bei Installationsfirmen in Verwendung stehenden Preßzangen zweckmäßig. Wesentlich ist, daß die Funktion des verpreßten O-Ringes erhalten bleibt und somit seine zulässigen Verformungsgrenzen (z.B. 15%) nicht überschritten werden. Die Materialverformung des Installationsrohres darf nicht zu einem Einfließen des Materials in die Ringnut des O-Ringes führen, da sonst eine Behinderung des O-Ringes in seiner Dichtwirkung erfolgt. Die Rohrverbindung nimmt durch die Verpressung im gerillten Bereich des Rohrstutzens mechanische Zugbeanspruchungen auf und gewährleistet durch die Verpressung des O-Ringes innerhalb der Grenzen der zulässigen Verformung desselben eine verbesserte Dichtwirkung, insbesondere bei niederen Drücken. Beim Verpressen ist es irrelevant, ob die Preßbacken der Preßzange eine oder mehrere durchgehende Ringflächen von beispielsweise 8 mm Breite aufweisen, oder ob die Preßflächen in radiale, im Umfang voneinander distanzierte, beispielsweise quadratische Einzelflächen aufgelöst sind oder ob zum Verpressen parallele Ringwulste, allenfalls mit dreieckigem Querschnitt in Preßzonen nebeneinanderliegend vorgesehen sind. Der O-Ring kann auch einer Preßwirkung dadurch unterliegen, daß die Preßflächen unmittelbar neben dem O-Ring liegen. Auch in diesem Fall kann eine entsprechende Verformung ohne Materialfluß in die Nut des O-Ringes und somit ohne Behinderung des O-Ringes erfolgen.

In Ausgestaltung der Erfindung ist es besonders zweckmäßig, wenn zwischen dem verpreßten O-Ring und der verpreßten Oberflächenstruktur (Ringnuten) des Anschlußstutzens ein weiterer O-Ring, vorzugsweise unverpreßt und elastisch verformbar angeordnet ist. Der verpreßte O-Ring dichtet bei Kaltwasser im Temperaturbereich unter 20°C und bei Druckwerten unter 2 bar. Der nicht einer zusätzlichen Pressung unterworfene O-Ring wirkt dichtend, sobald Betriebsdruck auftritt - z.B. bei 6 bar und übernimmt die Dichtungseigenschaften auch bei höheren Temperaturen somit auch bei 90°C.

Die Kombination eines zusätzlich verpreßten O-Ringes mit einem nicht der Verpressung unterliegenden O-Ringes und mit einer verpreßten stukturierten Zone ergibt Dichtheit in allen Bereichen und mechanische Festigkeit gegen Zugbeanspruchung.

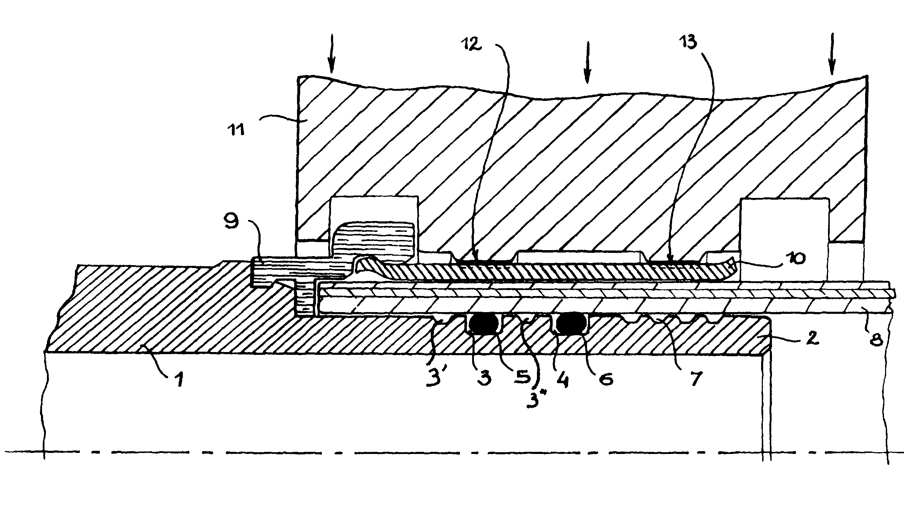

Ein Ausführungsbeispiel einer erfindungsgemäß verpreßbaren Rohrverbindung ist in der Zeichnung schematisch im Schnitt dargestellt.

Ein Rohrfitting 1, weist an seinem rohrseitigen Ende einen Anschlußstutzen 2 auf. Dieser trägt zwei Ringnuten 3, 4 für jeweils einen O-Ring 5, 6. Die Ringnut 3 ist beiderseits von Ringnuten 3' und 3" begrenzt. Ferner endet der Anschlußstutzen 2 in einem durch Ringnuten 7 strukturierten Bereich. Auf den Anschlußstutzen 2 ist ein Installationsrohr 8 aufgeschoben. Dabei handelt es sich um ein Aluminiumrohr mit beiderseitiger Kunststoffbeschichtung oder um ein Kunststoffrohr mit Metalleinlage oder allenfalls um ein Aluminiumrohr ohne besondere Beschichtung. Das Aufschieben wird durch einen Schnappring 9 begrenzt, der einerseits Durchbrüche aufweist oder aus durchsichtigem Material besteht, um das vollständige Ein- bzw. Aufschieben des Installationsrohres 8 überprüfen zu können und der anderseits einen Kontakt zwischen dem Aluminiumkern in der Rohrwand und dem Fitting, z.B. aus Messing verhindert. Damit wird einer Korrosion infolge elektrischer Spannungen vorgebeugt. In den Schnappring 9 schnappt eine Preßhülse 10 ein, die die Rohrverbindung manschettenartig umgibt.

Eine Preßzange weist mehrere Preßbacken auf, die in einer Zangenbewegung radial gegen die Preßhülse 10 geführt werden um dort örtlich den Querschnitt zu verjüngen und damit eine Preßverbindung herzustellen. Die Figur zeigt eine Preßbacke 11 im Querschnitt mit zwei ringsegmentförmigen Preßflächen 12, 13 vor dem Preßvorgang. Nach dem Verpressen sind die Preßflächen 12, 13 als Negativ in die Preßhülse 10 eingedrückt. Diese bleibenden Einschnürungen wirken auf das Installationsrohr 8 und letzteres verformt den O-Ring 5 zusätzlich zu der Verformung in der Ausgangslage (Basisverformung). Die endgültige Verformung bleibt in den Grenzen der für die Funktion des O-Ringes gemäß der Norm vorgeschriebenen Werte. Es fließt Material des Installationsrohres 8 in die Ringnuten 3', 3", die unter den Randbereichen der Preßfläche 12 liegen. Die Nut 3 selbst bleibt frei von verformtem Material, sodaß der Wirkungsbereich des O-Ringes 5 nicht eingeschränkt ist.

Die Positionierung der Preßbacken 11 erfolgt durch den Kragen des Schnappringes 9, der in einer tiefen Ringnut der Preßbacken 11 zu liegen kommt. Die Preßbacken sind symmetrisch ausgebildet, sodaß das Preßwerkzeug bzw. die Preßzange links und rechts verwendet werden kann.

Die Preßfläche 13 der Preßbacke 11 bzw. die als Negativ in der Preßhüle 10 ausgeprägten Preßfläche drückt das Installationsrohr 8 irreversibel in die Oberflächenstruktur, also in die Ringnuten 7 des Rohrstutzens 2. Dadurch entsteht eine erhöhte Haltekraft und eine besondere Widerstandsfähigkeit der Rohrverbindung gegen Zugbeanspruchungen.

Zwischen den beiden Preßflächen 12 und 13 liegt der O-Ring 6. Seine Verformung wird nicht durch eine zusätzliche Durchmessereinschnürung des Installationsrohres 8 verstärkt ausgeprägt. Vielmehr befindet sich der O-Ring 6 in der normgemäßen Basisverformung.

Wasser unter Betriebsdruck und mit hoher Temperatur (z.B. in einem Zentralheizungssystem) diffundiert durch die mechanische Preßverbindung im Bereich der Ringnuten 7 unter der Preßfläche 13. infolge des hohen Druckes wird der O-Ring 6 so verformt, daß er zuverlässig dichtet. Der O-Ring 5 bleibt - von statistischen Leckmengen abgesehen - funktionslos. Bei niederem Druck und kaltem Wasser tritt die Dichtwirkung des O-Ringes 6 nicht ein. Der O-Ring 5 übernimmt für diesen Zustand einer Anlage die wirksame Abdichtung.

Allenfalls kann auch der O-Ring 6 unter einer Preßfläche liegen. Es würde dadurch eine noch bessere Abdichtung für den Betriebsfall erfolgen. Wenn aber Phasen mit geringem Druck und Kaltwassertemperatur mit Betriebsphasen von höheren Drükken und Temperaturen wechseln, dann liefert die Ausführung gemäß dem Ausführungsbeispiel die besten Ergebnisse.

## Patentansprüche

1. Verpreßbare Rohrverbindung zwischen einem Rohrfitting mit Anschlußstutzen und einem Installationsrohr, wie beispielsweise einem beiderseits mit Kunststoff ummantelten Aluminiumrohr, mit mindestens zwei O-Ringen zwischen dem Anschlußstutzen und dem Installationsrohr, wobei die Verpressung zwischen dem Installationsrohr und einem oberflächenstrukturierten, beispielsweise gerillten Bereich des Anschlußstutzens vorgesehen und als in Umfangsrichtung des Installationsrohres verlaufende Preßfläche ausgebildet ist, wobei mindestens einer der O-Ringe (5) unter einer Preßfläche (12) bzw. unmittelbar neben einer Preßfläche oder unmittelbar zwischen zwei Preßflächen in der Preßhülse (10) oder im Installationsrohr (8) angeordnet ist und eine durch den Anpreßdruck unter der Preßfläche (12) bewirkte der zulässigen Verformung des O-Ringes (5) noch entsprechende, aber eine normgemäße Basisverformung vor dem Preßvorgang überschreitende Verformung aufweist, dadurch gekennzeichnet, daß zwischen dem verpreßten O-Ring (5) und der verpreßten Oberflächenstruktur (7) des Anschlußstutzens (2) ein weiterer O-Ring (6) unverpreßt und elastisch verformbar angeordnet ist, der sich vorzugsweise in der normgemäßen Basisverformung befindet.

2. Rohrverbindung nach Anspruch 1, dadurch gekennzeichnet, daß der O-Ring (5) in einer Ringnut (3) angeordnet und diese beiderseits von je einer Ringnut (3', 3") begrenzt ist.

3. Rohrverbindung nach Anspruch 1 oder 2, dadurch gekennzeichnet, daß die Preßfläche als kreiszylindrische Ringfläche gebildet ist.

4. Rohrverbindung nach einem der vorhergehenden Ansprüche, gekennzeichnet durch eine im Bereich des Anschlußstutzens (2) über das Installationsrohr (8) geschobene Preßhülse (10).

## Claims

1. A compressible pipe connexion between a pipe fitting with an attachment connexion and an installation pipe, such as for example an aluminium pipe coated with plastics material on both sides, with at least two O-rings between the attachment connexion and the installation pipe, wherein the compressing is provided between the installation pipe and a surface-textured, for example corrugated, area of the attachment connexion and is designed in the form of a pressing face extending in the peripheral direction of the installation pipe, and wherein at least one of the O-rings (5) is arranged under a pressing face (12) or directly adjacent to a pressing face or directly between two pressing faces in the pressing sleeve (10) or in the installation pipe (8) and is provided with a deformation which is produced by the pressing force under the pressing face (12) and still corresponds to the permissible deformation of the O-ring (5) but which before the pressing procedure exceeds a base deformation in accordance with a standard, **characterized in that** a further O-ring (6), which is preferably in the state of the base deformation in accordance with the standard, is arranged unpressed and resiliently deformable between the compressed O-ring (5) and the pressed surface structure (7) of the attachment connexion (2).

2. A pipe connexion according to Claim 1, **characterized in that** the O-ring (5) is arranged in an annular groove (3), and the said annular groove (3) is bounded on both sides by one respective annular groove (3', 3") in each case.

3. A pipe connexion according to Claim 1 or 2, **characterized in that** the pressing face is designed in the form of a circular cylindrical annular face.

4. A pipe connexion according to one of the preceding Claims, **characterized by** a pressing sleeve (10) pushed over the installation pipe (8) in the region of the attachment connexion (2).

## Revendications

1. Raccord à compression pour tuyaux entre un raccord de tuyau avec un raccord et un tube d'installation, comme par exemple un tube en aluminium revêtu des deux côtés de matière synthétique, avec au moins deux joints toriques entre le raccord et le tube d'installation où la compression est prévue entre le tube d'installation et une zone à surface structurée, par exemple rainurée du raccord et est réalisée comme face de compression s'étendant dans la direction périphérique du tube d'installation, où au moins l'un des joints toriques (5) est disposé en dessous d'une face de compression (12) respectivement directement à côté d'une face de compression ou directement entre deux faces de compression dans le manchon de compression (10) ou dans le tube d'installation (8) et présente une déformation provoquée par la pression d'application sous la face de compression (12), correspondant encore à la déformation admissible du joint torique (5) mais dépassant une déformation de base en conformité avec les normes avant l'opération de compression, caractérisé en ce qu'il est disposé entre le joint torique comprimé (5) et la structure de surface comprimée (7) du raccord (2) un joint torique supplémentaire (6) d'une manière non comprimée et déformable élastiquement qui se situe de préférence dans la déformation de base en conformité avec les normes.

2. Raccord pour tuyaux selon la revendication 1, caractérisé en ce que le joint torique (5) est disposé dans une rainure annulaire (3) et que celle-ci est délimitée des deux côtés respectivement par une rainure annulaire (3', 3").

3. Raccord pour tuyaux selon la revendication 1 ou 2, caractérisé en ce que la face de compression est réalisée comme face annulaire cylindrique circulaire.

4. Raccord pour tuyaux selon l'une des revendications précédentes, caractérisé par un manchon de compression (10) poussé au voisinage du raccord (2) sur le tube d'installation (8).
